Europäisches Patentamt

European Patent Office

Office européen des brevets

(11) Publication number: 0 311 325
A2

# EUROPEAN PATENT APPLICATION

(21) Application number: 88309162.1

(22) Date of filing: 03.10.88

(51) Int. Cl.4: A62D 3/00 , C01B 25/12 , C01B 25/20 , C02F 11/06

(30) Priority: 05.10.87 US 104191

(43) Date of publication of application:
12.04.89 Bulletin 89/15

(84) Designated Contracting States:
BE DE FR GB GR IT NL

(71) Applicant: STAUFFER CHEMICAL COMPANY DIVISION OF RHONE-POULENC, INC.
1 Corporate Drive
Shelton Connecticut 06484(US)

(72) Inventor: Roberts, Auston K.
13071 Benson Ave
Chino CA 91710(US)
Inventor: Trainer, William Edward
6640 Leafwood Drive
Anaheim CA 92807(US)
Inventor: Biederman, David L.
1504 Lyon Street
Columbia TN 38401(US)
Inventor: Duffin, Leon C.
4765 Santa Ana
Cudahy CA 90201(US)

(74) Representative: Smith, Sydney et al
Elkington and Fife Beacon House 113 Kingsway
London WC2B 6PP(GB)

(54) Method of waste disposal involving oxidation of elemental phosphorus.

(57) A method of waste disposal is described which comprises initiating a zone of oxidation by combining a source of elemental phosphorus and an oxygen-containing gas, within a protective layer of an inert, non-flammable fluid (such as water). The non-flammable fluid protects the elemental phosphorus from otherwise contacting atmospheric oxygen so that the elemental phosphorus is oxidized within the protective layer by the oxygen-containing gas thereby providing a zone of high temperature oxidation to incinerate the waste (e.g., a chemical waste).

# METHOD OF WASTE DISPOSAL INVOLVING OXIDATION OF ELEMENTAL PHOSPHORUS

This invention relates to method of waste disposal involving oxidation of elemental phosphorus.

A procedure is described in U.S. Patent No. 4,868,094 wherein an elemental phosphorus material is contacted with an oxygen-containing gas while the elemental phosphorus is protected from contact with atmospheric oxygen by a protective layer of an inert, non-flammable fluid, such as water. The bringing together of the oxygen-containing gas and elemental phosphorus, while the phosphorus is within the protective blanketing layer of fluid, such as water, causes highly exothermic oxidation of the phosphorus in a safe and efficient manner oxidation of the protective fluid layer. When water is the selected protective layer, the oxidation of the phosphorus generates $P_2O_5$ values and yields a phosphoric acid solution which can be recovered for ultimate commercial usage. The oxidation between the elemental phosphorus and oxygen, as mentioned above, is highly exothermic since phosphorus normally burns in air at extremely high temperatures in the neighborhood of $2300°C-2700°C$ depending, for example, upon the presence of excess air. If oxygen-enriched air or substantially pure oxygen is used, the temperature of oxidation can be even higher (e.g., $5000-5000°C$).

## SUMMARY OF THE PRESENT INVENTION

The present invention is a method of waste disposal which comprises using the aforementioned type of technology to incinerate an undesired waste. Although the waste, in a preferred embodiment, is a chemical waste, the present invention is broadly applicable to disposal, via incineration, of any waste or refuse. The present method comprises: (1) at least intially combining a source of elemental phosphorus and an oxygen-containing gas, within a protective layer of an inert, non-flammable fluid (such as water) which protects the elemental phosphorus from otherwise contacting atmospheric oxygen, to initiate a zone of extremely high temperature from the resulting oxidation; and (2) bringing a waste into contact with that oxidation zone. When the waste is brought into contact with the zone of oxidation intially generated by the elemental phosphorus and oxygen within the protective fluid blanket, the waste is incinerated or decomposed. The present invention, in another aspect, is directed to waste incineration by use of a sustained zone of oxidation within a layer of a fluid by the combination of a fuel and an oxygen-containing gas which produces and sustains the zone of oxidation in the fluid.

## DETAILED DESCRIPTION OF THE PRESENT INVENTION

The aforementioned U.S. Patent No. 4,686,094 is incorporated herein by reference for a description of the basic reaction of elemental phosphorus and oxygen-containing gas, within a protective blanketing fluid, which is preferably used to initiate the oxidation conditions used herein. As indicated in the Patent, the oxygen-containing gas that is used can comprises either pure oxygen or oxygen admixed with other gases. For example, if desired, air, which is a mixture of a minor amount of oxygen and a major amount of nitrogen, can be employed. However, the use of substantially pure oxygen is preferred for the instant invention. The type of pyrophoric elemental phosphorus material that can be employed in a preferred embodiment of the present process is also subject to variation and can include either substantially pure elemental phosphorus or elemental phosphorus-containing wastes, such as $P_4$-containing sludge. In cases wherein the elemental phosphorus source is $P_4$ sludge, the present process acts to ultimately dispose of two waste materials, i.e., the $P_4$ sludge and the other selected waste (e.g., a chemical waste). The process of the present invention is practiced by having the phosphorus source and oxygen-containing gas in the conditions fluid, which preferably is water, under the conditions outlined in the aforementioned Patent to initiate and then, if desired, to sustain the oxidation of the elemental phosphorus by the oxygen contained in the oxygen-containing gas. The oxidation is, as mentioned before, highly exothermic and provides the means whereby the waste is ultimately incinerated or decomposed in accordance with the present invention. If desired, the elemental phosphorus component can be initially present within the protective fluid layer with the oxygen-containing gas and waste being thereafter introduced when the instant process is to be practiced.

One novel aspect of the present invention, as compared to the process described in U.S. Patent No. 4,686,094 is the additional introduction of a waste (e.g., chemical waste) which is to be disposed in accordance with the present process. The type of waste that can be used in the present invention is subject of wide variation and includes such chemical wastes as polyhalogenated biphenyls, dioxins, dibenzofurans, etc.

The elemental phosphorus and oxygen gas are preferably used to initiate the zone of oxidation which is ultimately used to incinerate or decompose the chemical waste. Further combining of the elemental phosphorus and oxygen-containing gas will sustain the desired zone of highly exothermic oxidation. The waste (e.g., chemical waste) can be present in the fluid prior to initiation of the oxidation or can be added along with the elemental phosphorus and oxygen as the oxidation is further generated and sustained by those elements. It is even within the scope of the present invention to initially begin the oxidation reaction by mixing phosphorus and oxygen-containing gas to initially generate the desired, highly exothermic zone of oxidation needed for the oxidation of the waste with the substitution or inclusion of another fuel at a later point in time. In cases where the elemental phosphorus is pumped into a vessel or reactor, which can function as a waste disposal furnace in accordance with the present invention, cessation of the phosphorus feed can be performed with substitution of the other fuel. For example, hydrogen gas is a by-product of the underwater oxidation of the waste, and it can be recovered and recycled to be substituted for the elemental phosphorus, as a fuel component, since hydrogen and oxygen also combine in a highly exothermic oxidation reaction. The production of hydrogen gas as a by-product is believed due to the molecular disassociation of water molecules into hydrogen and oxygen due to the extremely hot temperatures generated by the elemental phosphorus-oxygen reaction. Acetylene is another fuel which burns in a highly exothermic manner with oxygen.

In a preferred embodiment of the invention, the reaction between elemental phosphorus and oxygen is highly exothermic and generates extremely high temperatures. It is generally known in the art that $P_4$ and oxygen combine and generate high temperature conditions. For example, German Offen. No. 3,319,606 speaks of converting preheated ($600°$-$800°$ K) white $P_4$ vapor to $P_2O_3$ with an oxygen/nitrogen mixture at $2000°$-$6000°$ K (about $1727°$-$5727°$ C). It mentions that the $P_4$ vapor is burned at $5400°$ K (about $5127°$ C) when the $P_4$:$O_2$:$N_2$ ratio is 1:3:1.75. U.S. Patent No. 4,603,039 to B. Kuxdorf et al. mentions that Japanese Patent Specification No. 54-84,890 describes burning liquid phosphorus with dry air to give phosphorus pentoxide at temperatures of up to $2000°$ C. Additionally, J. C. Barber, in U.S. Patent No. 4,608,241 at Col. 17, gives a table of estimated phosphorus flame temperatures for the reaction of elemental phosphorus and air, and indicates that the estimated actual temperature will range from a high of $2700°$ C (with no excess air) to a value of about $900°$ C (with 300% excess air. The usual excess air values are given as in the range of 10-25% to yield flame temperatures in the range of $2300°$-$2500°$ C. Air contains about 20% oxygen so that higher flame temperature would result if the oxygen content were raised as is the case when oxygen enriched air or substantially pure oxygen is used.

The aforementioned Barber patent, at Col. 17, line 13 to Col. 18, line 16 indicates that organic chemicals (e.g., such hazardous wastes as polychlorinated biphenyls, dibenzodioxins, or dibenzofurans) can be present in the liquid phosphorus which is then burned in air. It indicates that would be expected that a thermal phosphoric acid unit utilizing such technology would meet Environmental Protection Agency requirements for disposal of such chemical wastes. However, Barber is silent in regard to conducting the $P_4$/$O_2$ oxidation within a fluid (e.g., water) protective layer which: (1) can serve as an extremely effective heat sink for the highly exothermic reaction of $P_4$ and $O_2$; (2) prevents airborne formation of dense smoke which needs sophisticated scrubbing systems; and (3) which also acts to absorb or capture the by-products of the incineration procedure. Even if $P_4$ is not chosen as the fuel for most of the duration of the present incineration process, the fluid used to blanket the initial $P_4$ and $O_4$ reaction acts to absorb or capture by-products from the highly exothermic incineration zone.

## EXAMPLE 1

The instant process was used to incinerate ten barrels (each 55 gallon size) of elemental phosphorus-containing sand that had been twice exposed to oxidation by the atmosphere. The treatment was carried out under a protective water blanket in a 54 inch diameter single bottom standpipe that was 12 feet in height. Pure oxygen gas was sparged into the protective water layer to generate an exothermic zone of oxidation and thereby treat the $P_4$-contaminated sand. Some gaseous by-products filtered through and out the stack of the open system during the procedure. At the end of the treatment, however, no visual trace of sand remained in the barrels or in the standpipe after the oxygen treatment.

## EXAMPLE 2

The process of the instant invention was also used to incinerate approximately 55 gallons of petroleum products which were intermixed with about two yards of sand and elemental phosphorus sludge.

Two possible modes for the incinerator design are contemplated as described in greater detail below.

The first design contemplates a three vessel configuration vented to appropriate scrubber apparatus. The first vessel is a water-covered mixer vessel equipped with an agitator and having a conical bottom. This vessel would be useful for mixing slurry material designated for disposal in accordance with the present invention. A pump located at the cone of the vessel can be used to convey such material through a relatively small (e.g., 1 inch to 4 inch) pipeline to the second water-filled vessel which functions as an incinerator/reactor in accordance with the present invention. The water-filled incinerator/reactor vessel can be in the shape of a closed ellipse with the slurry pipe from the mixing vessel entering on the straight (or closed) wall near the junction of the straight wall and the elliptical wall and being perpendicular to the straight wall and just above the vessel bottom. The incinerator/reactor vessel can be formed of 316 stainless steel. The slurry is forced through a narrow sheet of flame formed by admixture of phosphorus ($P_4$) and oxygen. This flame is shaped and controlled by the configuration of the burner nozzle, oxygen pressure and volume, and the volume of the extruded, metered molten phosphorus. It is contemplated that the flame is parallel to the straight wall of the vessel and is bisected by the slurry to be disposed. The flame temperature will not transfer outside the immediate area of pure oxygen. The flame will create some agitation at the back side of the vessel where top residual material, satisfactory in regard to sterility, can be removed, as desired. The third vessel is an equalizing vessel to maintain the desired water level in both previously described vessels. It is connected to both the mixer and incinerator/reactor by large top and bottom piping.

A second design in accordance with the present invention is a single vessel embodiment appropriately vented to a suitable scrubber. This vessel is a large, deep, water-covered combination vessel serving the functions of the mixer vessel and incinerator/reactor vessel in the first design. It can be of circular shape, divided through its diameter with a small high pressure flame used as an agitator and the driving force in the mixer side of the vessel. Slurry to be disposed, driven by the small high pressure flame, if forced through a wall opening and through a flame zone similar to the above-described three vessel mode. Equalizing lines or apertures in the wall insure appropriate water levels and water pressure on the fires in the lower portion of the vessel and aid in the absorption of gaseous by-products.

The foregoing illustrates certain embodiments of the present invention but should not be constructed in a limiting sense. The claims which follow set forth the scope of protection desired.

## Claims

1. A method of waste disposal which comprises initiating a zone of oxidation by mixing a source of elemental phosphorus and an oxygen-containing gas, within a protective layer of an inert non-flammable fluid which protects the elemental phosphorus from contact with the atmosphere, and bringing a waste into contact with the zone of oxidation so that the waste is thereby incinerated within the layer of fluid.

2. A method of waste disposal which comprises sustaining a zone of oxidation within a protective layer of an inert non-flammable fluid by mixing a fuel and an oxygen-containing gas to produce the zone of oxidation and bringing a waste into contact with the zone of oxidation to incinerate the waste within the layer of fluid.

3. A method as claimed in claim 1 or claim 2 characterised in that the fluid is water and the oxygen-containing gas is substantially pure oxygen.

4. A method as claimed in claim 1 or claim 2 characterised in that the waste is a chemical waste.

5. A method as claimed in any of claims 1 to 4 characterised in that the fluid is water.